# EUROPÄISCHE PATENTSCHRIFT

(11) **EP 1 078 138 B1**
(45) Veröffentlichungstag und Bekanntmachung des Hinweises auf die Patenterteilung: **27.08.2003**
(21) Anmeldenummer: 99920789.7
(22) Anmeldetag: 27.04.1999
(51) Int. Cl.: E05B 49/00, G01S 13/78

(54) **MOBILER TRANSPONDER FÜR EIN FAHRZEUG**
MOBILE TRANSPONDER FOR A MOTOR VEHICLE
TRANSPONDEUR MOBILE POUR VEHICULE

(30) Priorität: 09.05.1998 DE 19820921
(43) Veröffentlichungstag der Anmeldung: 28.02.2001
(73) Patentinhaber: Bayerische Motoren Werke Aktiengesellschaft, 80809 München (DE)
(72) Erfinder: BARTZ, Rüdiger, D-80809 München (DE); BEFELEIN, Carsten, D-85540 Haar (DE)
(74) Vertreter: Bullwein, Fritz
(86) Internationale Anmeldenummer: EP9902819
(87) Internationale Veröffentlichungsnummer: WO99058794

(56) Entgegenhaltungen:
- DE-C- 19 513 498
- GB-A- 2 240 418
- US-A- 5 594 448
- PATENT ABSTRACTS OF JAPAN vol. 010, no. 086 (P-443), 4. April 1986 (1986-04-04) & JP 60 222782 A (KIYOURITSU DENPA KK), 7. November 1985 (1985-11-07)

## Beschreibung

Die Erfindung bezieht sich auf einen mobilen Transponder für ein Fahrzeug mit einer optischen Anzeige.

Ein derartiger Schlüssel ist aus der DE 37 40 770 A sowie der GB 2 240 418 A bekannt. Dabei wird über die optische Anzeige signalisiert, ob das Fahrzeug verriegelt ist. Häufig ist es jedoch erforderlich, eine Information über den Standort des Fahrzeugs zu erhalten. Es ist diesem Zusammenhang bekannt, einen Schlüssel des Fahrzeugs mit einem Sprachspeicher zu versehen, in den der Standort des Fahrzeug eingesprochen werden kann (vgl. DE 43 09 819 A). Das Wiederauffinden des Fahrzeugs ist davon abhängig, ob diese Maßnahme tatsächlich z. B. beim Verlassen des Fahrzeugs durchgeführt wurde.

Der Erfindung liegt die Aufgabe zugrunde, einen mobilen Transponder für Fahrzeuge zu schaffen, dessen optische Anzeige eine weitergehende Aussage über das Fahrzeug ermöglicht.

Gelöst wird diese Aufgabe durch die Merkmale des Patentanspruchs 1.

Es ist nunmehr mit Hilfe der optischen Anzeige erkennbar, wo sich das Fahrzeug befindet. Über die Antennen wird ein Fragesignal ausgesandt, das eine Antwort des Fahrzeugs in Form eines Funksignals zur Folge hat. Diese Antwort wird im Transponder ausgewertet und als optische Information ausgegeben. Bedingt durch die Richtcharakteristik der Antennen ist es damit möglich, den Standort des Fahrzeugs hinsichtlich seiner Richtung in bezug auf die jeweilige Position und Ausrichtung des Transponders zu erfassen. Durch eine entsprechende optische Anzeige wird diese Richtung dem Fahrer signalisiert.

Die optischen Anzeige kann als kleines Display, beispielsweise ein LCD-Display ausgebildet sein. Die Richtung, in der sich das Fahrzeug in Bezug auf den mobilen Transponder befindet, kann dann als Pfeil innerhalb des Display dargestellt werden.

Entprechend ist es möglich, die Richtungsinformation mit Hilfe von Leuchten, z.B. LEDs darzustellen. Diese können beispielsweise im Kreis angeordnet sein. Die Richtung, in der sich das Fahrzeug befindet, kann in Bezug auf den Mittelpunkt des Kreises bestimmt sein. Es können auch zwei sich diagonal gegenüberliegende LEDs aktiviert werden. Damit läßt sich die Richtung relativ bestimmen und anzeigen. Häufig ist diese Information ausreichend. Der Fahrer braucht von den beiden Richtungen, die damit möglich sind, nur die zur tatsächlichen Richtung entgegengesetzte ausscheiden.

Demgegenüber verbessert ist eine Ausführung, bei der die Richtung zutreffend und eindeutig dargestellt wird. Voraussetzung dafür ist eine entsprechende Richtcharakteristik der Antennen.

Bei einer weiteren Verbesserung der Erfindung bestimmen die Antennen nicht nur die Richtung, sondern auch tatsächlich die Entfernung des Fahrzeugs vom jeweiligen Standort. Der Fahrzeugbenutzer hat damit die Informationen zur Verfügung, wie weit von seinem jeweiligen Standort, an dem er sich mit seinem mobilen Transponder befindet, das Fahrzeug entfernt ist.

Anhand der Zeichnung ist die Erfindung weiter erläutert. Es zeigt
Fig. 1 ein erstes Ausführungsbeispiel der Erfindung und
Fig. 2 eine Alternative zum Ausführungsbeispiel von Fig. 1.

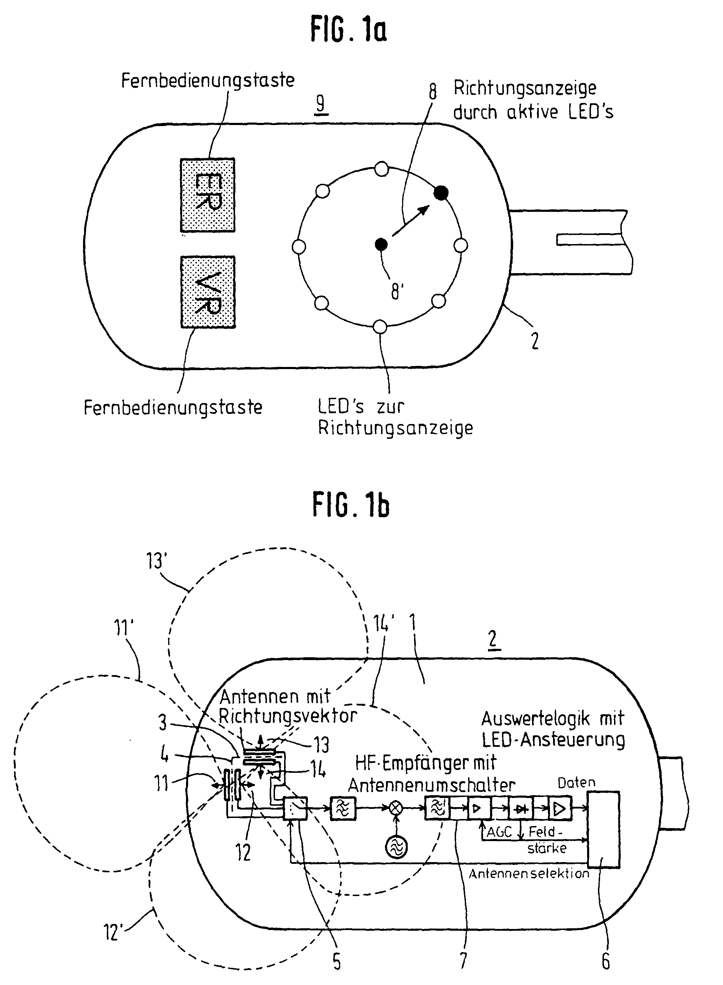

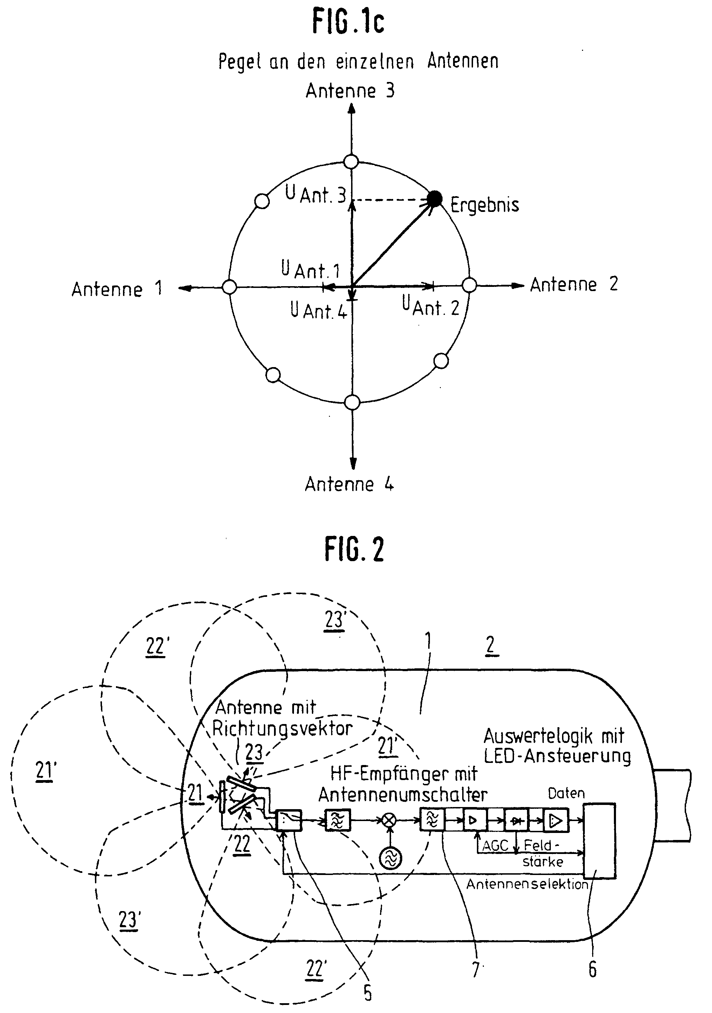

Beim Ausführungsbeispiel von der aus den Teilen a,b und c bestehenden Fig. 1 ist ein in b) mit seinen Einzelteilen gezeigter mobiler Transponder 1 in einem mechanischen Fahrzeug-Schlüssel 2 (a)) integriert. Der Transponder 1 enthält vier Antennen 11, 12, 13 und 14. von denen jeweils zwei 11, 12 bzw. 13, 14 durch ein dazwischen liegendes Abschirmblech 3, 4 voneinander getrennt sind. Bedingt durch die Wirkung der Abschirmbleche besitzen die Antennen eine Richtcharakteristik, die durch strichliert eingezeichnete Keulen 11'-14' symbolisiert werden.

Den Antennen 11 bis 14 zugeordnet ist ein Umschalter 5, über den die Antennen durch eine Auswerteeinheit 6 der Reihe nach aktiviert werden. Die Antennen senden auf einen manuell aufgegegebenen Befehl hin jeweils ein Fragesignal aus, das von dem gesuchten Fahrzeug aufgenommen wird und durch Ausgabe jeweils eines Antwortsignals durch das Fahrzeug beantwortet wird. Dieser Befehl wird durch Betätigen einer Fernbedienungstaste VR im Schlüsselkopf 9 aufgegeben.

Über den Umschalter 5 werden diese Antwortsignale der Reihe nach über eine entsprechende Aufbereitungsschaltung 7 in die Auswerteeinheit 6 eingegeben. Bedingt durch die in c) dargestellte Richtungsempfindlichkeit der Antennen ergibt sich aus der Auswertung der insgesamt 4 Antwortsignale eine Information über den Standort des Fahrzeugs. Diese Information wird mit Hilfe einer optischen Anzeige 8, die in der Oberfläche des Schlüsselkopfes 9 angeordnet ist, dargestellt. Die Anzeige 8 besteht aus im Kreis um ein Zentrum 8' angeordneten LEDs.

Von diesen wird die in der Richtung des gesuchten Fahrzeuges gelegene und die im Zentrum befindliche LED aktiviert. Bei einer waagrechten Anordnung des Schlüsselkopfes 9 ist durch die gedachte Verbindung dieser LEDs die Richtung bestimmt, in der sich das gesuchte Fahrzeug befindet.

Durch einen zwischen den beiden aktivierten LEDs angeordneten Pfeil ist es auch möglich, ein Maß für die Entfernung des Fahrzeugs darzustellen. Bei einer kleinen Entfernung von z.B. weniger als 50m wird der Pfeil stark beleuchtet, bei einer größeren Entfernung hingegen schwächer. Ein Maß für die Entfernung ergibt sich aus einem Stärkevergleich der mit korrespondierenden Antennen 11 und 12 bzw. 13 und 14 aufgenommenen Antwortssignale. Unter der Annahme, daß die Signale vom gesuchten Fahrzeug mit gleicher Intensität ausgesandt werden, ergibt sich durch die Bildung des Quotienten der Intensität der korrespondierenden Antwortsignale und der Bewertung dieser Quotienten mit der individuellen Intensität eine Information über die Entfernung des gesuchten Fahrzeuges vom Transponder 1.

Beim Ausführungsbeispiel von Fig. 2 sind anstelle von vier Antennen drei Antennen 21, 22, 23 angeordnet. Diese besitzen ebenfalls die strichliert eingezeichnete Richtcharakteristiken. Damit ist es bei einem entsprechenden Ablauf von Frage- und Antwortsignalen, die nacheinander mit jeder der Antennen ausgesandt bzw. als Antwort des Fahrzeugs aufgenommen werden, wiederum möglich, die gewünschte Richtung und durch Vergleich der Intensität der jeweiligen Signale auch deren Entfernung als Information zu gewinnen und durch eine optische Anzeige wie einen Pfeil in einem Display oder wie in Fig. 1 gezeigt, in einem LED-Kreis darzustellen.

## Patentansprüche

1. Mobiler Transponder (1) für Fahrzeuge, mit einer dem Fahrzeug zugeordneten optischen Anzeige (8), **dadurch gekennzeichnet, dass** der mobile Transponder (1) Antennen (11-14 bzw. 21-23) mit einer dreidimensionalen Richtcharakteristik enthält, die ein vom Fahrzeug ausgehendes Signal aufnehmen und einer Auswertelogik (6) zuführen, und dass die Auswertelogik daraus Richtungsinformationen über den Standort des Fahrzeugs in Bezug zum mobilen Transponder gewinnt und einer der Richtung des Fahrzeug-Standorts zugeordneten Anzeige (8) zuführt.

2. Mobiler Transponder nach Anspruch 1, **dadurch gekennzeichnet, dass** die Anzeige der Richtung durch einen Pfeil (8) erfolgt, der in die Richtung weist.

3. Mobiler Transponder nach Anspruch 1 oder 2, **dadurch gekennzeichnet, dass** die mit den Antennen gewonnene Information auch eine Aussage über die Entfernung des Fahrzeugs vom mobilen Transponder ermöglicht.

4. Mobiler Transponder nach Anspruch 3, **dadurch gekennzeichnet, dass** die Entfernung mittels der Anzeige dargestellt ist.

5. Mobiler Transponder nach Anspruch 2 in Verbindung mit einem der Ansprüche 3 oder 4, dass die Anzeige der Entfernung mittels der Leuchtstärke des Pfeils erfolgt.

## Claims

1. A mobile transponder (1) for vehicles, with an optical indicator (8) assigned to the vehicle **characterised in that** the mobile transponder (1) includes antennae (10-14 or 21-23) with a three dimensional directional characteristic which detect a signal transmitted by the vehicle and direct it to an evaluation logic (6) and that from this the evaluation logic obtains directional information on the position of the vehicle in relation to the mobile transponder and directs this to an indicator (8) assigned to the direction of the vehicle position.

2. A mobile transponder according to claim 1, **characterised in that** the indication of direction is effected by an arrow (8), which points in the direction.

3. A mobile transponder according to claim 1 or claim 2, **characterised in that** the information obtained by the antennae also makes possible a statement on the distance of the vehicle from the mobile transponder.

4. A mobile transponder according to claim 3, **characterised in that** the distance is represented by means of the indicator.

5. A mobile transponder according to claim 2 in combination with one of the claims 3 or 4, which effects the indication of distance by means of the intensity of light of the arrow.

## Revendications

1. Transpondeur mobile (1) pour véhicule automobile, équipé d'un indicateur optique (8) associé au véhicule,
**caractérisé en ce que**
le transpondeur (1) comporte des antennes (11 à 14 ou 21 à 23) qui présentent chacune une caractéristique tridimensionnelle, ces antennes recevant un signal émis par le véhicule et le transmettant à une logique d'exploitation qui en déduit des informations concernant la direction dans laquelle se trouve le véhicule par rapport au transpondeur mobile et fait apparaître sur l'indicateur optique (8) une indication de la direction où se trouve le véhicule.

2. Transpondeur mobile selon la revendication 1,
**caractérisé en ce que**
l'indication de la direction est figurée par une flèche (8) orientée dans cette direction.

3. Transpondeur mobile selon la revendication 1 ou 2,
**caractérisé en ce que**
l'information donnée par les antennes permet également de donner une information concernant l'éloignement du véhicule par rapport au transpondeur mobile.

4. Transpondeur mobile selon la revendication 3,
**caractérisé en ce que**
l'éloignement est représenté par l'indicateur.

5. Transpondeur mobile selon la revendication 2, en liaison avec la revendication 3 ou 4,
**caractérisé en ce que**
l'indication de l'éloignement est donnée par l'intensité lumineuse de la flèche.
